# EUROPEAN PATENT SPECIFICATION

(11) **EP 3 059 912 B1**
(45) Date of publication and mention of the grant of the patent: **06.09.2017**
(21) Application number: 13897419.1
(22) Date of filing: 18.11.2013
(51) Int. Cl.: H04L 12/751, H04L 12/721

(54) **PATH CALCULATION METHOD AND APPARATUS FOR ASON**
WEGBERECHNUNGSVERFAHREN UND -VORRICHTUNG FÜR ASON
PROCÉDÉ ET APPAREIL DE CALCUL DE CHEMIN POUR ASON

(43) Date of publication of application: 24.08.2016
(73) Proprietor: Huawei Technologies Co., Ltd., Longgang District Shenzhen, Guangdong 518129 (CN)
(72) Inventor: CHEN, Chunhui, Shenzhen Guangdong 518129 (CN)
(74) Representative: Pfenning, Meinig & Partner mbB
(86) International application number: PCT/CN2013/087340
(87) International publication number: WO 2015/070460

(56) References cited:
- CN-A- 101 902 406
- CN-A- 102 316 390
- CN-A- 102 917 287
- US-A1- 2008 069 123
- US-A1- 2010 104 281
- MAHER ALI: "Generalized sharing in survivable optical networks", IEEE / ACM TRANSACTIONS ON NETWORKING, IEEE / ACM, NEW YORK, NY, US, vol. 14, no. 6, 1 December 2006 (2006-12-01), pages 1388-1399, XP058126681, ISSN: 1063-6692, DOI: 10.1109/TNET.2006.886293

## Description

### TECHNICAL FIELD

The present invention relates to the field of network technologies, and in particular, to a path calculation method and apparatus for an ASON network.

### BACKGROUND

A wavelength division network refers to an optical network in which a wavelength division multiplexing (Wavelength Division Multiplexing, WDM) transmission principle is used. From the perspective of the development of a WDM technology, an earliest WDM system is a simple point-to-point system and is not real optical layer networking. Then, to meet a networking requirement on a large granularity and dynamicity of a bandwidth, technologies such as a reconfigurable optical add/drop multiplexer (Reconfiguration Optical Add/Drop Multiplexer, ROADM) and a wavelength adjustable laser are gradually used for WDM network construction, so that a system has a capability of flexibly scheduling a wavelength path, so as to construct a real optical layer network. With the maturity and application of a WDM networking technology, WDM network management also changes accordingly and gradually develops towards a schedulable, intelligent, and service-operation-oriented WDM network management direction. An automatically switched optical network (Automatically Switched Optical Network, ASON) adds a control plane to an optical network, provides automatic resource discovery and automatic path calculation by using a routing protocol, and implements automatic connection management by using signaling.

For the automatically switched optical network in the prior art, a source site of a service is generally responsible for calculating a service path. For a wavelength division optical layer service, when a service path is calculated, the path needs to meet a constraint of an optical impairment. It is required to use an electrical regeneration when a path is relatively long, and therefore, when calculating a service path, the ASON further needs to select an available electrical regeneration.

A first service path calculation method in the prior art is:
calculating, by a source site of a service, a path according to an actual topology of a network. Specifically, a shortest path algorithm is used first, that is, a path having a minimum path cost is calculated in a network topology. The path cost may be set according to different needs, for example, when a shortest distance is needed, a path cost is a sum of distances of all links on a path. When a shortest path fails to meet a requirement, a shift algorithm is performed on the shortest path, to calculate finite sub-optimal paths.

When both the shortest path and the finite sub-optimal paths fail to meet a requirement, by traversing all possible paths in a network, an available path is selected from all the possible paths.

A second service path calculation method in the prior art is:
calculating an optical impairment reachability graph of each site in advance, and calculating a path for a service according to the virtual topology constituted according to the reachability graph. That is, each site calculates a virtual topology of an entire network, and each line in the virtual topology represents a path between two sites, where an optical impairment of the path meets a requirement without a regeneration. When calculating a path, the source site performs a calculation according to a virtual topology of an entire network of the source site.

Defects of the first service path calculation method in the prior art are:
When a shortest path algorithm or a method for shifting finite sub-optimal paths is used, because of a location of a regeneration site, there is a possibility that no regeneration site is added to a path cost, so that there is no regeneration available to a calculated path. Therefore, path calculation fails. When a method for traversing all possible paths is used, calculation costs much time, and therefore, a requirement of a function such as rerouting on time cannot be met.

Defects of the second service path calculation method in the prior art are:
When a change occurs in a network, a virtual topology of an entire network of each site needs a real-time calculation, so that a calculation amount is large, and it is required to have both relatively much time and relatively large storage space for the calculation. This method is used in a distributed ASON network, and each site needs to be equipped with a high-performance and high-cost control board. Compared with the distributed ASON network, an ASON network in which routing is calculated in a centralized manner is used needs to configure more servers and use them as centralized calculation units, which increases costs.
Patent publication US2008/069123 discloses a path calculation method for an ASON network, wherein each site in the ASON network separately calculates a site that can be reached in a case in which no regeneration is used.

### SUMMARY

In view of this, embodiments of the present invention provide a path calculation method and apparatus for an ASON network, which can improve a success rate and efficiency of path calculation and reduce costs.

A first aspect provides a path calculation method for an ASON network, where each site in the ASON network separately calculates a site that can be reached in a case in which no regeneration is used and uses the site as a reachable site, to form a reachable site list, further selects a site having an idle regeneration capability from a respective reachable site list as a reachable regeneration site, to form a reachable regeneration site list, and floods the reachable regeneration site list in the ASON network; and the method includes: adding a reachable site in a reachable site list of a source site to a virtual topology; determining, according to a reachable regeneration site list of the source site and a reachable regeneration site list of another site that is received by the source site, a site that can be reached in a case in which a regeneration is used, and adding, to the virtual topology, the site that can be reached in the case in which a regeneration is used; and determining, according to the virtual topology and an actual topology of the ASON network, an actual topology path from the source site to a destination site.

In a first possible implementation manner of the first aspect, the step of adding a reachable site in a reachable site list of a source site to a virtual topology includes: connecting the reachable site in the reachable site list of the source site and the source site.

With reference to the first possible implementation manner of the first aspect, in a second possible implementation manner, the step of determining, according to a reachable regeneration site list of the source site and a reachable regeneration site list of another site that is received by the source site, a site that can be reached in a case in which a regeneration is used, and adding, to the virtual topology, the site that can be reached by the source site in the case in which a regeneration is used includes: determining, according to the reachable regeneration site list of the source site, an existing site that has an idle regeneration capability and is in the virtual topology; receiving, by the source site, the reachable regeneration site list of the another site, and connecting the existing site that has an idle regeneration capability and a reachable regeneration site that is in a reachable regeneration site list of the existing site; determining, according to the reachable regeneration site list of the source site and the reachable regeneration site list of the another site that is received by the source site, a site that has no idle regeneration capability and is in the ASON network; and connecting the existing site having an idle regeneration capability and the site that has no idle regeneration capability and of which a reachable regeneration site list includes the existing site having an idle regeneration capability.

With reference to the second possible implementation manner of the first aspect, in a third possible implementation manner, the step of determining, according to the virtual topology and an actual topology of the ASON network, an actual topology path from the source site to a destination site includes: calculating, in the virtual topology, a least-hop virtual topology path from the source site to the destination site; and using the site, which has an idle regeneration capability, on the virtual topology path as an explicit site and determining the actual topology path with reference to the actual topology of the ASON network.

In a fourth possible implementation manner of the first aspect, each site in the ASON network floods the reachable regeneration site list to all sites in the ASON network separately by extending the OSPF protocol.

With reference to the fourth possible implementation manner of the first aspect, in a fifth possible implementation manner, each site in the ASON network selects, as the reachable site, a site through which an optical impairment of a transmission path meets an optical impairment requirement in a case in which no regeneration is used.

With reference to the fifth possible implementation manner of the first aspect, in a sixth possible implementation manner, the reachable site list is stored only in the site of the reachable site list.

A second aspect provides a path calculation apparatus for an ASON network, where each site in the ASON network separately calculates a site that can be reached in a case in which no regeneration is used and uses the site as a reachable site, to form a reachable site list, further selects a site having an idle regeneration capability from a respective reachable site list as a reachable regeneration site, to form a reachable regeneration site list, and floods the reachable regeneration site list in the ASON network; and the path calculation apparatus includes: a first virtual topology generation module, configured to add a reachable site in a reachable site list of a source site to a virtual topology; a second virtual topology generation module, configured to determine, according to a reachable regeneration site list of the source site and a reachable regeneration site list of another site that is received by the source site, a site that can be reached by the source site in a case in which a regeneration is used, and add, to the virtual topology, the site that can be reached by the source site in the case in which a regeneration is used; and an actual topology path generation module, configured to determine, according to the virtual topology and an actual topology of the ASON network, an actual topology path from the source site to a destination site.

In a first possible implementation manner of the second aspect, the first virtual topology generation module further includes a first site connection unit, and the first site connection unit connects the reachable site in the reachable site list of the source site and the source site.

With reference to the first possible implementation manner of the second aspect, in a second possible implementation manner, the second virtual topology generation module further includes a site determining unit and a second site connection unit, where the site determining unit determines, according to the reachable regeneration site list of the source site, an existing site that has an idle regeneration capability and is in the virtual topology; the source site receives the reachable regeneration site list of the another site, and the second site connection unit connects the existing site that has an idle regeneration capability and a reachable regeneration site that is in a reachable regeneration site list of the existing site; the site determining unit determines, according to the reachable regeneration site list of the source site and the reachable regeneration site list of the another site that is received by the source site, a site that has no idle regeneration capability and is in the ASON network; and the second site connection unit connects the existing site having an idle regeneration capability and the site that has no idle regeneration capability and of which a reachable regeneration site list includes the existing site having an idle regeneration capability.

With reference to the second possible implementation manner of the second aspect, in a third possible implementation manner of the second aspect, the actual topology path generation module further includes a path calculation unit and a path selection unit, where the path calculation unit calculates, in the virtual topology, a least-hop virtual topology path from the source site to the destination site; and the path selection unit uses the site, which has an idle regeneration capability, on the virtual topology path as an explicit site and determines the actual topology path with reference to the actual topology of the ASON network.

In a fourth possible implementation manner of the second aspect, each site in the ASON network floods the reachable regeneration site list to all sites in the ASON network separately by extending the OSPF protocol.

With reference to the fourth possible implementation manner of the second aspect, in a fifth possible implementation manner, each site in the ASON network selects, as the reachable site, a site through which an optical impairment of a transmission path meets an optical impairment requirement in a case in which no regeneration is used.

With reference to the fifth possible implementation manner of the second aspect, in a sixth possible implementation manner, the reachable site list is stored only in the site of the reachable site list.

A third aspect provides a path calculation apparatus for an ASON network, where the path calculation apparatus includes a memory, a network interface, a processor, and a bus system, and the memory, the network interface, and the processor are separately connected to the bus system, where a first program is stored in the memory, and the first program is used to enable each site in the ASON network to separately calculate a site that can be reached in a case in which no regeneration is used and use the site as a reachable site, to form a reachable site list, and further select a site having an idle regeneration capability from a respective reachable site list as a reachable regeneration site, to form a reachable regeneration site list; the network interface is configured to flood the reachable regeneration site list in the ASON network; a second program is stored in the memory, and the second program is used to add a reachable site in a reachable site list of a source site to a virtual topology, determine, according to a reachable regeneration site list of the source site and a reachable regeneration site list of another site that is received by the source site, a site that can be reached in a case in which a regeneration is used, add, to the virtual topology, the site that can be reached by the source site in the case in which a regeneration is used, and further determine, according to the virtual topology and an actual topology of the ASON network, an actual topology path from the source site to a destination site; and the processor is configured to execute the first program and the second program.

In a first possible implementation manner of the third aspect, the second program is further used to connect the reachable site in the reachable site list of the source site and the source site.

With reference to the first possible implementation manner of the third aspect, in a second possible implementation manner, the second program is further used to determine, according to the reachable regeneration site list of the source site, an existing site that has an idle regeneration capability and is in the virtual topology; enable the source site to receive the reachable regeneration site list of the another site, and connect the existing site that has an idle regeneration capability and a reachable regeneration site that is in a reachable regeneration site list of the existing site; determine, according to the reachable regeneration site list of the source site and the reachable regeneration site list of the another site that is received by the source site, a site that has no idle regeneration capability and is in the ASON network; and connect the existing site having an idle regeneration capability and the site that has no idle regeneration capability and of which a reachable regeneration site list includes the existing site having an idle regeneration capability.

With reference to the second possible implementation manner of the third aspect, in a third possible implementation manner, the second program is further used to calculate, in the virtual topology, a least-hop virtual topology path from the source site to the destination site; and use the site, which has an idle regeneration capability, on the virtual topology path as an explicit site and determine the actual topology path with reference to the actual topology of the ASON network.

In a fourth possible implementation manner of the third aspect, the network interface is further configured to enable each site in the ASON network to flood the reachable regeneration site list to all sites in the ASON network separately by extending the OSPF protocol.

With reference to the fourth possible implementation manner of the third aspect, in a fifth possible implementation manner, the first program is further used to enable each site in the ASON network to select, as the reachable site, a site through which an optical impairment of a transmission path meets an optical impairment requirement in a case in which no regeneration is used.

With reference to the fifth possible implementation manner of the third aspect, in a sixth possible implementation manner, the first program is further used to enable the reachable site list to be stored only in the site of the reachable site list.

By means of the foregoing technical solutions, the embodiments of the present invention provide a path calculation method and apparatus for an ASON network. First, each site in an ASON network separately calculates a site that can be reached in a case in which no regeneration is used and uses the site as a reachable site, to form a reachable site list, further selects a site having an idle regeneration capability from a respective reachable site list as a reachable regeneration site, to form a reachable regeneration site list, and floods the reachable regeneration site list in the ASON network. Further, a reachable site in a reachable site list of a source site is added to a virtual topology; a site that can be reached in a case in which a regeneration is used is determined according to a reachable regeneration site list of the source site and a reachable regeneration site list of another site that is received by the source site; and the site that can be reached in the case in which a regeneration is used is added to the virtual topology. Finally, an actual topology path from the source site to a destination site is determined according to the virtual topology and an actual topology of the ASON network. In the foregoing manner, according to the present invention, it is only required to calculate a reachable site of each site, and a calculation amount is distributed to each site, thereby improving efficiency, lowering a performance requirement for a control board of the site, and reducing costs. Further, after the reachable site of each site is calculated, a reachable regeneration site is determined according to the reachable site, and a reachable regeneration site list generated by the reachable regeneration site is flooded in an ASON network, so that each site can generate a virtual topology. Finally, an actual topology path from a source site to a destination site is obtained according to the virtual topology and an actual topology, thereby improving a success rate and efficiency of path calculation.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an actual topology of an ASON network;
FIG. 2 is a schematic diagram of reachable sites corresponding to some sites in an ASON network;
FIG. 3 is a flowchart of a path calculation method for an ASON network according to a first embodiment of the present invention;
FIG. 4 is a flowchart of a path calculation method for an ASON network according to a second embodiment of the present invention;
FIG. 5 is a schematic diagram of a topology formed when a path from a source site to a destination site in an ASON network is calculated according to the method shown in FIG. 4;
FIG. 6 is a schematic diagram of a structure of a path calculation apparatus for an ASON network according to a third embodiment of the present invention;
FIG. 7 is a schematic diagram of a structure of a path calculation apparatus for an ASON network according to a fourth embodiment of the present invention; and
FIG. 8 is a schematic diagram of a structure of a path calculation apparatus for an ASON network according to a fifth embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

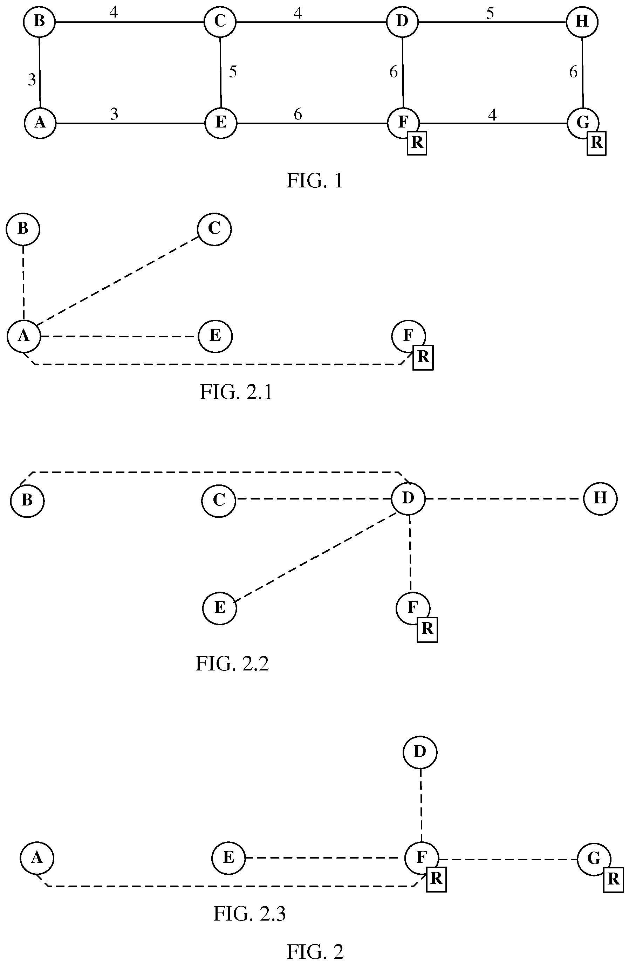

Referring to FIG. 1 and FIG. 2 first, FIG. 1 is a schematic diagram of an actual topology structure of an ASON network, and FIG. 2 is a schematic diagram of reachable sites corresponding to some sites in an ASON network. Before a path from a source site to a destination site in an ASON network is calculated, it is required to determine a reachable site list and a reachable regeneration site list of each site. Specifically, each site in the ASON network, such as a site A, a site B, a site C, a site D, a site E, a site F, a site G, and a site H shown in FIG. 1, separately calculates a site that can be reached in a case in which no regeneration is used and uses the site as a reachable site, to form a reachable site list, and further selects a site having an idle regeneration capability from a respective reachable site list as a reachable regeneration site, to form a reachable regeneration site list. Optionally, each site in the ASON network selects, as a reachable site, a site of which an optical impairment of a transmission path meets an optical impairment requirement in a case in which no regeneration is used. That is, there is a path between each site in a reachable site list and a reachable site of each site, where the path can meet an optical impairment requirement in a case in which no regeneration is used in both directions. The optical impairment may be calculated according to a degradation value of an optical signal-to-noise ratio (OSNR, Optical Signal to Noise Ratio). As shown in FIG. 1, a cost value of a transmission path is marked between sites. When the cost value of the transmission path is greater than or equal to a threshold, it may be considered that an optical impairment of the transmission path does not meet an optical impairment requirement. This embodiment describes a process of calculating a reachable site list and a reachable regeneration site list by each site in the present invention by illustrating processes of calculating a reachable site list and a reachable regeneration site list of the site A, the site D, and the site F. Details are shown in FIG. 2.

It is assumed that, when a cost value of a transmission path is greater than or equal to 10, an optical impairment of the transmission path does not meet an optical impairment requirement. It can be calculated, according to cost values of transmission paths marked in FIG. 1, that reachable sites that can be reached by the site A in a case in which no regeneration is used are the site B, the site C, the site E, and the site F, and a reachable site list of the site A is shown in FIG. 2.1. Further, a site having an idle regeneration capability is selected from the reachable site list (that is, FIG. 2.1) of the site A, where the site having an idle regeneration capability is specifically that the site includes an idle regeneration R, and a site meeting the condition is the site F, that is, a reachable regeneration site list of the site A includes the site F.

Similarly, it is calculated, according to the cost values of the transmission paths marked in FIG. 1, that reachable sites that can be reached by the site D in a case in which no regeneration is used are the site B, the site C, the site E, the site F, and the site H, and a reachable site list of the site D is shown in FIG. 2.2. Further, a site having an idle regeneration capability and selected from the reachable site list (that is, FIG. 2.2) of the site D includes the site F, that is, a reachable regeneration site list of the site D includes the site F.

It is calculated, according to the cost values of the transmission paths marked in FIG. 1, that reachable sites that can be reached by the site F in a case in which no regeneration is used are the site A, the site D, the site E, and the site G, and a reachable site list of the site F is shown in FIG. 2.3. Further, a site having an idle regeneration capability and selected from the reachable site list (that is, FIG. 2.3) of the site F includes G, that is, a reachable regeneration site list of the site F includes the site G.

In this embodiment, the reachable site list is stored only in the site of the reachable site list. After obtaining a reachable regeneration site list of each site in the ASON network according to a reachable site list, each site in the ASON network floods the reachable regeneration site list in the ASON network. Optionally, each site floods the reachable regeneration site list to all sites in the ASON network by separately extending the Open Shortest Path First (Open Shortest Path First, OSPF) protocol.

In the present invention, a reachable site list and a reachable regeneration site list of each site in an ASON network are calculated first, and the reachable regeneration site list is flooded. When a change occurs in the network, such as a fiber cut, fiber repair, and a fiber attenuation change, it is only required to re-calculate a reachable site list and a reachable regeneration site list of each site and re-flood the reachable regeneration site list. According to the present invention, a calculation amount is distributed to each site, thereby improving calculation efficiency, lowering a performance requirement for a control board of the site, and reducing costs.

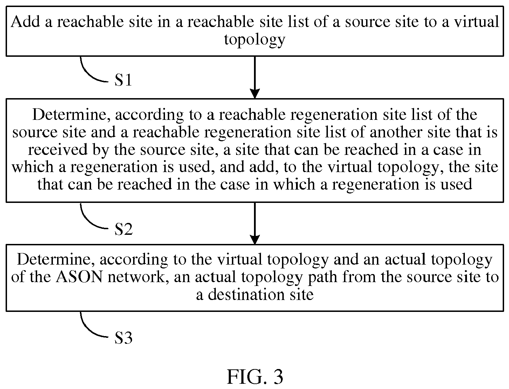

Referring to FIG. 3, FIG. 3 is a flowchart of a path calculation method for an ASON network according to a first embodiment of the present invention. It should be noted that, a path from a source site to a destination site in an ASON network is calculated in a case in which a reachable site list and a reachable regeneration site list of each site are determined. A process of determining a reachable site list and a reachable regeneration site list of each site is described as above, and details are not described herein again. As shown in FIG. 3, a path calculation method for an ASON network includes the following steps:
Step S 1: Add a reachable site in a reachable site list of a source site to a virtual topology.
Step S2: Determine, according to a reachable regeneration site list of the source site and a reachable regeneration site list of another site that is received by the source site, a site that can be reached in a case in which a regeneration is used, and add, to the virtual topology, the site that can be reached in the case in which a regeneration is used.
   After step S1 and step S2, a virtual topology of the source site is formed.
Step S3: Determine, according to the virtual topology and an actual topology of the ASON network, an actual topology path from the source site to a destination site.

In this embodiment, a virtual topology of a source site is first formed according to a reachable site list of the source site and a reachable regeneration site list of another site that is received by the source site, and then an actual topology path from the source site to a destination site is determined according to the virtual topology and an actual topology of the source site, thereby improving a success rate and efficiency of path calculation.

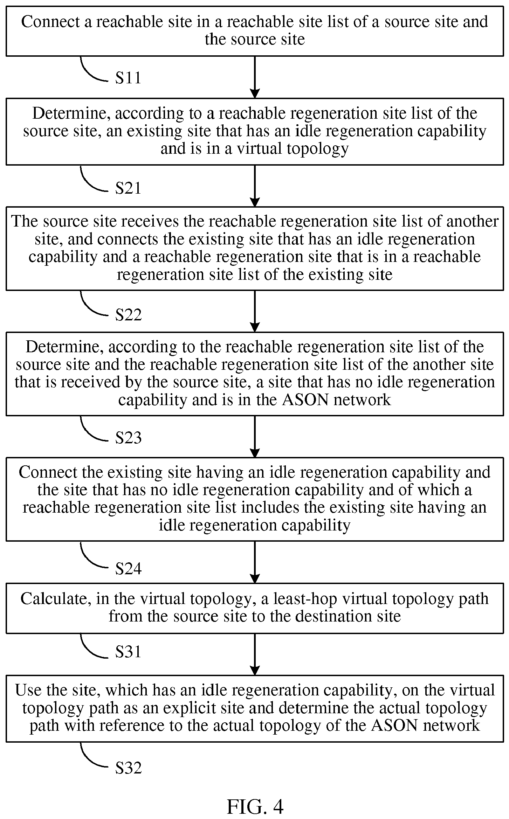

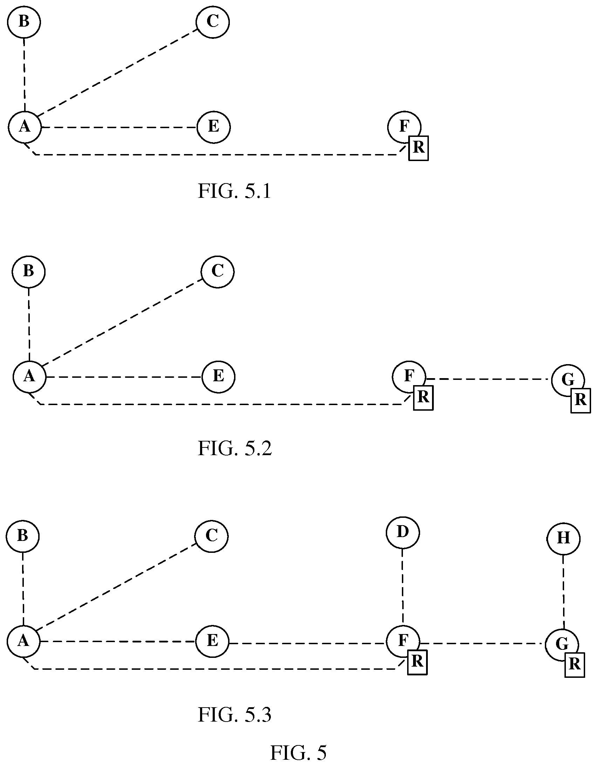

A path calculation method for an ASON network in a second embodiment further provided in the present invention is described in detail on the basis of a path calculation method for an ASON network in a first embodiment shown in FIG. 3. To facilitate understanding, in this embodiment, processes of calculating a path from a source site to a destination site are specifically listed according to the steps of the path calculation method for an ASON network. For details, refer to FIG. 4 and FIG. 5 together. FIG. 4 is a flowchart of a path calculation method for an ASON network according to a second embodiment of the present invention, and FIG. 5 is a schematic diagram of a topology formed when a path from a source site to a destination site in an ASON network is calculated according to the method shown in FIG. 4. In this embodiment, assuming that a path from a site A to a site D needs to be calculated, the site A is a source site, and the site D is a destination site. The method includes:
Step S11: Connect the reachable site in the reachable site list of the source site and the source site. It can be known from above description that the reachable sites in the reachable site list of the site A are the site B, the site C, the site E, and the site F. A virtual topology shown in FIG. 5.1 is obtained by connecting the site B, the site C, the site E, and the site F and the site A.
Step S21: Determine, according to the reachable regeneration site list of the source site, an existing site that has an idle regeneration capability and is in the virtual topology.
   In this step, a reachable regeneration site list of the site A includes F, and therefore, it is determined that an existing site that has an idle regeneration capability in a virtual topology of the site A is the site F.
Step S22: The source site receives the reachable regeneration site list of the another site, and connects the existing site that has an idle regeneration capability and a reachable regeneration site that is in a reachable regeneration site list of the existing site. In this step, reachable regeneration site lists, which are received by the site A, of other sites are specifically: reachable regeneration site lists of the site B and the site C are null, all of the reachable regeneration site lists of the site D, the site E, and the site G include F, and reachable regeneration site lists of both the site F and the site H include G. A reachable regeneration site list of the existing site F that has an idle regeneration capability is the site G, and therefore, the site F is connected to the site G, as shown in FIG. 5.2. Step S23: Determine, according to the reachable regeneration site list of the source site and the reachable regeneration site list of the another site that is received by the source site, a site that has no idle regeneration capability and is in the ASON network.
   In this step, except the source site, sites that have no idle regeneration capability are determined, that is, relative to the site A, in the ASON network, sites that have no idle regeneration capability are the site B, the site C, the site D, the site E, and the site H.
Step S24: Connect the existing site having an idle regeneration capability and the site that has no idle regeneration capability and of which a reachable regeneration site list includes the existing site having an idle regeneration capability.

In this step, relative to the site A, reachable regeneration site lists of the site D and the site E include the site F having an idle regeneration capability, and the site D and the site E are sites having no idle regeneration capability; and the site D and the site E are separately connected to the site F, as shown in FIG. 5.3.

In this step, the method further includes connecting a site having no idle regeneration capability and a reachable regeneration site of the site having no idle regeneration capability, where the reachable regeneration site of the site having no idle regeneration capability may be connected to an existing site that has an idle regeneration capability. Relative to the site A, a reachable regeneration site of the site H is the site G, the site G may be connected to the site F having an idle regeneration capability, the site H is a site having no idle regeneration capability, and the site H and the site G are connected, as shown in FIG. 5.3.
Step S31: Calculate, in the virtual topology, a least-hop virtual topology path from the source site to the destination site.
   It can be known from a virtual topology graph 5.3 formed in step S24 that, relative to the site A, a least-hop virtual topology path to the site D is A-F-D.
Step S32: Use the site, which has an idle regeneration capability, on the virtual topology path as an explicit site and determine the actual topology path with reference to the actual topology of the ASON network.

It can be known from step S31 that a site, that has an idle regeneration capability, of the virtual topology path A-F-D is the site F. Therefore, the site F is used as an explicit site of the path from the site A to the site D, and a path, that has a minimum optical impairment, of paths passing through the site F is further selected. With reference to FIG. 1, it can be obtained that a path A-E-F-D meets the condition. It is obtained from this that a path from the site A to the site D is A-E-F-D.

In this embodiment, a virtual topology of a source site is first formed according to a reachable site list of the source site and a reachable regeneration site list of another site that is received by the source site, and then an actual topology path from the source site to a destination site is determined according to the virtual topology and an actual topology of the source site, thereby improving a success rate and efficiency of path calculation.

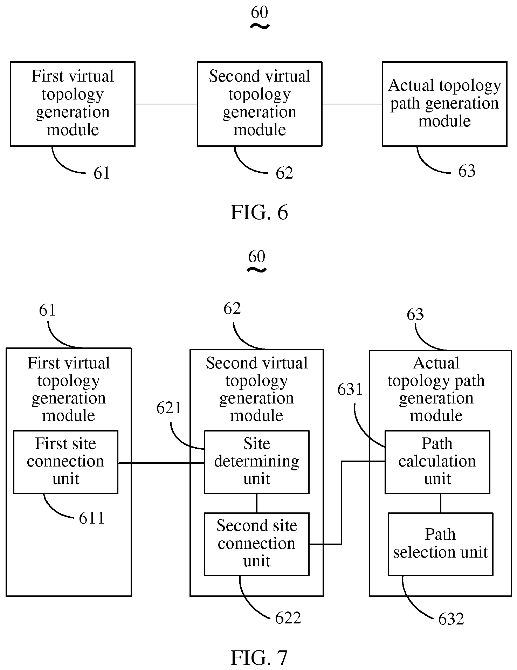

Referring to FIG. 6, FIG. 6 is a schematic diagram of a structure of a path calculation apparatus for an ASON network according to a third embodiment of the present invention. It should be noted that, a path from a source site to a destination site in an ASON network is calculated in a case in which a reachable site list and a reachable regeneration site list of each site are determined. A process of determining a reachable site list and a reachable regeneration site list of each site is described as above, and details are not described herein again. As shown in FIG. 6, in the present invention, a path calculation apparatus 60 for an ASON network includes a first virtual topology generation module 61, a second virtual topology generation module 62, and an actual topology path generation module 63.

The first virtual topology generation module 61 is configured to add a reachable site in a reachable site list of a source site to a virtual topology.

The second virtual topology generation module 62 is configured to determine, according to a reachable regeneration site list of the source site and a reachable regeneration site list of another site that is received by the source site, a site that can be reached in a case in which a regeneration is used, and add, to the virtual topology, the site that can be reached by the source site in the case in which a regeneration is used.

The actual topology path generation module 63 is configured to determine, according to the virtual topology and an actual topology of the ASON network, an actual topology path from the source site to a destination site.

In this embodiment, the first virtual topology generation module 61 and the second virtual topology generation module 62 first form a virtual topology of a source site according to a reachable site list of the source site and a reachable regeneration site list of another site that is received by the source site, and then the actual topology path generation module 63 determines an actual topology path from the source site to a destination site according to the virtual topology and an actual topology of the source site, thereby improving a success rate and efficiency of path calculation.

A path calculation apparatus for an ASON network in a fourth embodiment further provided in the present invention is described in detail on the basis of a path calculation apparatus for an ASON network in a third embodiment shown in FIG. 6. As shown in FIG. 7, the first virtual topology generation module 61 further includes a first site connection unit 611, and the first site connection unit 611 connects the reachable site in the reachable site list of the source site and the source site. The second virtual topology generation module 62 further includes a site determining unit 621 and a second site connection unit 622.

The site determining unit 621 determines, according to the reachable regeneration site list of the source site, an existing site that has an idle regeneration capability and is in the virtual topology. The source site receives the reachable regeneration site list of the another site, and the second site connection unit 622 connects the existing site that has an idle regeneration capability and a reachable regeneration site that is in a reachable regeneration site list of the existing site.

The site determining unit 621 determines, according to the reachable regeneration site list of the source site and the reachable regeneration site list of the another site that is received by the source site, a site that has no idle regeneration capability and is in the ASON network.

The second site connection unit 622 connects the existing site having an idle regeneration capability and the site that has no idle regeneration capability and of which a reachable regeneration site list includes the existing site having an idle regeneration capability.

The actual topology path generation module 63 further includes a path calculation unit 631 and a path selection unit 632.

The path calculation unit 631 calculates, in the virtual topology, a least-hop virtual topology path from the source site to the destination site

The path selection unit 632 uses the site, which has an idle regeneration capability, on the virtual topology path as an explicit site and determines the actual topology path with reference to the actual topology of the ASON network.

Assuming that in this embodiment, a path from the site A to the site D is calculated, the site A is a source site, and the site D is a destination site. A schematic diagram of a topology formed when the path from the site A to the site D is calculated according to the path calculation apparatus 60 for an ASON network in this embodiment is shown in FIG. 5. A specific calculation process is described as above and details are not described herein again.

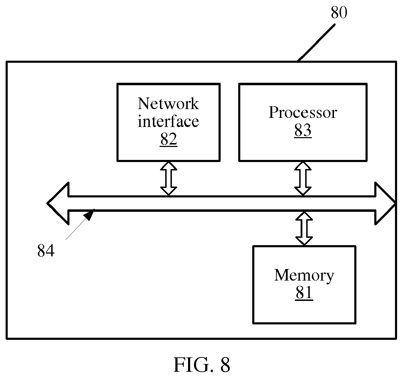

Referring to FIG. 8, FIG. 8 is a path calculation apparatus for an ASON network according to a fifth embodiment of the present invention. As shown in FIG. 8, in the present invention, the path calculation apparatus 80 for an ASON network includes a memory 81, a network interface 82, a processor 83, and a bus system 84. The memory 81, the network interface 82, and the processor 83 are separately connected to the bus system 84.

A first program is stored in the memory 81, and the first program is used to enable each site in the ASON network to separately calculate a site that can be reached in a case in which no regeneration is used and use the site as a reachable site, to form a reachable site list, as shown in FIG. 2, and further select a site having an idle regeneration capability from a respective reachable site list as a reachable regeneration site, to form a reachable regeneration site list, as shown in FIG. 2.

The network interface 82 is configured to flood the reachable regeneration site list in the ASON network.

A second program is stored in the memory 81, and the second program is used to add a reachable site in a reachable site list of a source site to a virtual topology, determine, according to a reachable regeneration site list of the source site and a reachable regeneration site list of another site that is received by the source site, a site that can be reached in a case in which a regeneration is used, add, to the virtual topology, the site that can be reached by the source site in the case in which a regeneration is used, and further determine, according to the virtual topology and an actual topology of the ASON network, an actual topology path from the source site to a destination site.

The processor 84 is configured to execute the first program and the second program.

Optionally, the first program is further used to enable each site in the ASON network to select, as the reachable site, a site of which an optical impairment of a transmission path meets an optical impairment requirement in a case in which no regeneration is used.

In this embodiment, the reachable site list is stored only in the site of the reachable site list. Optionally, the network interface 82 is further configured to enable each site in the ASON network to flood the reachable regeneration site list to all sites in the ASON network separately by extending the OSPF protocol.

Optionally, the second program is further used to connect the reachable site in the reachable site list of the source site and the source site.

Optionally, the second program is further used to determine, according to the reachable regeneration site list of the source site, an existing site that has an idle regeneration capability and is in the virtual topology;
connect the existing site that has an idle regeneration capability and a reachable regeneration site that is in a reachable regeneration site list of the existing site;
determine, according to the reachable regeneration site list of the source site and the reachable regeneration site list of the another site that is received by the source site, a site that has no idle regeneration capability and is in the ASON network; and
connect the existing site having an idle regeneration capability and the site that has no idle regeneration capability and of which a reachable regeneration site list includes the existing site having an idle regeneration capability.

Optionally, the second program is further used to calculate, in the virtual topology, a least-hop virtual topology path from the source site to the destination site; and
use the site, which has an idle regeneration capability, on the virtual topology path as an explicit site and determine the actual topology path with reference to the actual topology of the ASON network.

In this embodiment, a reachable site list and a reachable regeneration site list of each site in an ASON network are calculated first, and a calculation amount is distributed to each site, thereby improving calculation efficiency, lowering a performance requirement for a control board of the site, and reducing costs.

After a reachable site list and a reachable regeneration site list of each site in an ASON network are determined, when a path from a source site to a destination site is calculated, a virtual topology of the source site is formed according to the reachable site list of the source site and a reachable regeneration site list of another site that is received by the source site, and then an actual topology path from the source site to a destination site is determined according to the virtual topology and an actual topology of the source site, thereby improving a success rate and efficiency of path calculation.

In the several implementation manners provided in the present application, it should be understood that the disclosed apparatus and method may be implemented in other manners. For example, the described implementation manners of the apparatus embodiment are merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the implementation manners of the embodiments of the present application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the implementation manners of the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

## Claims

1. A path calculation method for an ASON network, wherein each site in the ASON network separately calculates a site that can be reached in a case in which no regeneration is used and uses the site as a reachable site, to form a reachable site list, further selects a site having an idle regeneration capability from a respective reachable site list as a reachable regeneration site, to form a reachable regeneration site list, and floods the reachable regeneration site list in the ASON network; and the method comprises the following steps:
adding (S1) a reachable site in a reachable site list of a source site to a virtual topology; determining (S2), according to a reachable regeneration site list of the source site and a reachable regeneration site list of another site that is received by the source site, a site that can be reached by the source site in a case in which a regeneration is used, and adding, to the virtual topology, the site that can be reached by the source site in the case in which a regeneration is used; and determining (S3), according to the virtual topology and an actual topology of the ASON network, an actual topology path from the source site to a destination site.

2. The method according to claim 1, wherein the step of adding a reachable site in a reachable site list of a source site to a virtual topology comprises:
connecting the reachable site in the reachable site list of the source site and the source site.

3. The method according to claim 2, wherein the step of determining, according to a reachable regeneration site list of the source site and a reachable regeneration site list of another site that is received by the source site, a site that can be reached by the source site in a case in which a regeneration is used, and adding, to the virtual topology, the site that can be reached by the source site in the case in which a regeneration is used comprises:
determining, according to the reachable regeneration site list of the source site, an existing site that has an idle regeneration capability and is in the virtual topology;
receiving, by the source site, the reachable regeneration site list of the another site, and connecting the existing site that has an idle regeneration capability and a reachable regeneration site that is in a reachable regeneration site list of the existing site;
determining, according to the reachable regeneration site list of the source site and the reachable regeneration site list of the another site that is received by the source site, a site that has no idle regeneration capability and is in the ASON network; and
connecting the existing site having an idle regeneration capability and the site that has no idle regeneration capability and of which a reachable regeneration site list comprises the existing site having an idle regeneration capability.

4. The method according to claim 3, wherein the step of determining, according to the virtual topology and an actual topology of the ASON network, an actual topology path from the source site to a destination site comprises:
calculating, in the virtual topology, a least-hop virtual topology path from the source site to the destination site; and
using the site, which has an idle regeneration capability, on the virtual topology path as an explicit site and determining the actual topology path with reference to the actual topology of the ASON network.

5. The method according to claim 1, wherein each site in the ASON network floods the reachable regeneration site list to all sites in the ASON network separately by extending the OSPF protocol.

6. The method according to claim 5, wherein each site in the ASON network selects, as the reachable site, a site through which an optical impairment of a transmission path meets an optical impairment requirement in a case in which no regeneration is used.

7. The method according to claim 6, wherein the reachable site list is stored only in the site of the reachable site list.

8. A path calculation apparatus (60) for an ASON network, wherein each site in the ASON network separately calculates a site that can be reached in a case in which no regeneration is used and uses the site as a reachable site, to form a reachable site list, further selects a site having an idle regeneration capability from a respective reachable site list as a reachable regeneration site, to form a reachable regeneration site list, and floods the reachable regeneration site list in the ASON network; and the path calculation apparatus comprises:
a first virtual topology generation module (61), configured to add a reachable site in a reachable site list of a source site to a virtual topology;
a second virtual topology generation module (62), configured to determine, according to a reachable regeneration site list of the source site and a reachable regeneration site list of another site that is received by the source site, a site that can be reached by the source site in a case in which a regeneration is used, and add, to the virtual topology, the site that can be reached by the source site in the case in which a regeneration is used; and
an actual topology path generation module (63), configured to determine, according to the virtual topology and an actual topology of the ASON network, an actual topology path from the source site to a destination site.

9. The path calculation apparatus according to claim 8, wherein the first virtual topology generation module further comprises a first site connection unit, and the first site connection unit connects the reachable site in the reachable site list of the source site and the source site.

10. The path calculation apparatus according to claim 9, wherein the second virtual topology generation module further comprises a site determining unit and a second site connection unit,
wherein
the site determining unit determines, according to the reachable regeneration site list of the source site, an existing site that has an idle regeneration capability and is in the virtual topology;
the source site receives the reachable regeneration site list of the another site, and the second site connection unit connects the existing site that has an idle regeneration capability and a reachable regeneration site that is in a reachable regeneration site list of the existing site;
the site determining unit determines, according to the reachable regeneration site list of the source site and the reachable regeneration site list of the another site that is received by the source site, a site that has no idle regeneration capability and is in the ASON network; and
the second site connection unit connects the existing site having an idle regeneration capability and the site that has no idle regeneration capability and of which a reachable regeneration site list comprises the existing site having an idle regeneration capability.

11. The path calculation apparatus according to claim 10, wherein the actual topology path generation module further comprises a path calculation unit and a path selection unit, wherein
the path calculation unit calculates, in the virtual topology, a least-hop virtual topology path from the source site to the destination site; and
the path selection unit uses the site, which has an idle regeneration capability, on the virtual topology path as an explicit site and determines the actual topology path with reference to the actual topology of the ASON network.

12. The path calculation apparatus according to claim 8, wherein each site in the ASON network floods the reachable regeneration site list to all sites in the ASON network separately by extending the OSPF protocol.

13. The path calculation apparatus according to claim 12, wherein each site in the ASON network selects, as the reachable site, a site through which an optical impairment of a transmission path meets an optical impairment requirement in a case in which no regeneration is used.

14. The path calculation apparatus according to claim 13, wherein the reachable site list is stored only in the site of the reachable site list.

15. A path calculation apparatus (80) for an ASON network, wherein the path calculation apparatus comprises a memory (81), a network interface (82), processor (83), and a bus system (84), and the memory, the network interface, and the processor are separately connected to the bus system, wherein a first program is stored in the memory, and the first program is used to enable each site in the ASON network to separately calculate a site that can be reached in a case in which no regeneration is used and use the site as a reachable site, to form a reachable site list, and further select a site having an idle regeneration capability from a respective reachable site list as a reachable regeneration site, to form a reachable regeneration site list;
the network interface is configured to flood the reachable regeneration site list in the ASON network;
a second program is stored in the memory, and the second program is used to add a reachable site in a reachable site list of a source site to a virtual topology, determine, according to a reachable regeneration site list of the source site and a reachable regeneration site list of another site that is received by the source site, a site that can be reached by the source site in a case in which a regeneration is used, add, to the virtual topology, the site that can be reached by the source site in the case in which a regeneration is used, and further determine, according to the virtual topology and an actual topology of the ASON network, an actual topology path from the source site to a destination site; and
the processor is configured to execute the first program and the second program.

## Patentansprüche

1. Wegberechnungsverfahren für ein "ASON"-Netzwerk, wobei jeder Ort in dem "ASON"-Netzwerk einen Ort separat berechnet, welcher in einem Fall erreicht werden kann, in welchem keine Regeneration verwendet wird, und den Ort als einen erreichbaren Ort verwendet, um eine Liste erreichbarer Orte zu bilden, weiterhin einen Ort mit einer ruhenden Regenerationsfähigkeit aus einer jeweiligen Liste erreichbarer Orte als einen erreichbaren Regenerationsort auswählt, um eine Liste erreichbarer Regenerationsorte zu bilden, und die Liste erreichbarer Regenerationsorte in dem "ASON"-Netzwerk flutet; und das Verfahren die folgenden Schritte umfasst:
Hinzufügen (S1) eines erreichbaren Orts in einer Liste erreichbarer Orte eines Quellorts zu einer virtuellen Topologie;
Bestimmen (S2) gemäß einer Liste erreichbarer Regenerationsorte des Quellorts und einer Liste erreichbarer Regenerationsorte eines anderen Orts, welche durch den Quellort empfangen wird, eines Orts, welcher durch den Quellort in einem Fall erreicht werden kann, in welchem eine Regeneration verwendet wird, und Hinzufügen des Orts zu der virtuellen Topologie, welcher durch den Quellort in dem Fall erreicht werden kann, in welchem eine Regeneration verwendet wird; und
Bestimmen (S3) gemäß der virtuellen Topologie und einer tatsächlichen Topologie des "ASON"-Netzwerks eines tatsächlichen Topologiewegs von dem Quellort zu einem Zielort.

2. Verfahren nach Anspruch 1, wobei der Schritt des Hinzufügens eines erreichbaren Orts in einer Liste erreichbarer Orte eines Quellorts zu einer virtuellen Topologie Folgendes umfasst:
Verbinden des erreichbaren Orts in der Liste erreichbarer Orte des Quellorts mit dem Quellort.

3. Verfahren nach Anspruch 2, wobei der Schritt des Bestimmens gemäß einer Liste erreichbarer Regenerationsorte des Quellorts und einer Liste erreichbarer Regenerationsorte eines anderen Orts, welche durch den Quellort empfangen wird, eines Orts, welcher durch den Quellort in einem Fall erreicht werden kann, in welchem eine Regeneration verwendet wird, und Hinzufügen des Orts zu der virtuellen Topologie, welcher durch den Quellort in dem Fall erreicht werden kann, in welchem eine Regeneration verwendet wird, Folgendes umfasst:
Bestimmen gemäß der Liste erreichbarer Regenerationsorte des Quellorts eines existierenden Orts, welcher eine ruhende Regenerationsfähigkeit aufweist und in der virtuellen Topologie ist;
Empfangen der Liste erreichbarer Regenerationsorte des anderen Orts durch den Quellort und Verbinden des existierenden Orts, welcher eine ruhende Regenerationsfähigkeit aufweist, mit einem erreichbaren Regenerationsort, welcher in einer Liste erreichbarer Regenerationsorte des existierenden Orts ist;
Bestimmen gemäß der Liste erreichbarer Regenerationsorte des Quellorts und der Liste erreichbarer Regenerationsorte des anderen Orts, welche durch den Quellort empfangen wird, eines Orts, welcher keine ruhende Regenerationsfähigkeit aufweist und in dem "ASON"-Netzwerk ist; und
Verbinden des existierenden Orts, welcher eine ruhende Regenerationsfähigkeit aufweist, mit dem Ort, welcher keine ruhende Regenerationsfähigkeit aufweist und bei welchem eine Liste erreichbarer Regenerationsorte den existierenden Ort mit einer ruhenden Regenerationsfähigkeit umfasst.

4. Verfahren nach Anspruch 3, wobei der Schritt des Bestimmens gemäß der virtuellen Topologie und einer tatsächlichen Topologie des "ASON"-Netzwerks eines tatsächlichen Topologiewegs von dem Quellort zu einem Zielort Folgendes umfasst:
Berechnen in der virtuellen Topologie eines virtuellen Topologiewegs mit den wenigsten Teilstrecken von dem Quellort zu dem Zielort; und
Verwenden des Orts, welcher eine ruhende Regenerationsfähigkeit aufweist, auf dem virtuellen Topologieweg als einen expliziten Ort und Bestimmen des tatsächlichen Topologiewegs unter Bezugnahme auf die tatsächliche Topologie des "ASON"-Netzwerks.

5. Verfahren nach Anspruch 1, wobei jeder Ort in dem "ASON"-Netzwerk die Liste erreichbarer Regenerationsorte an alle Orte in dem "ASON"-Netzwerk durch Erweitern des "OSPF"-Protokolls separat flutet.

6. Verfahren nach Anspruch 5, wobei jeder Ort in dem "ASON"-Netzwerk einen Ort als den erreichbaren Ort auswählt, durch welchen eine optische Störung eines Übertragungswegs eine optische Störungsanforderung in einem Fall erfüllt, in welchem keine Regeneration verwendet wird.

7. Verfahren nach Anspruch 6, wobei die Liste erreichbarer Orte nur an dem Ort der Liste erreichbarer Orte gespeichert ist.

8. Wegberechnungsvorrichtung (60) für ein "ASON"-Netzwerk, wobei jeder Ort in dem "ASON"-Netzwerk einen Ort separat berechnet, welcher in einem Fall erreicht werden kann, in welchem keine Regeneration verwendet wird, und den Ort als einen erreichbaren Ort verwendet, um eine Liste erreichbarer Orte zu bilden, weiterhin einen Ort mit einer ruhenden Regenerationsfähigkeit aus einer jeweiligen Liste erreichbarer Orte als einen erreichbaren Regenerationsort auswählt, um eine Liste erreichbarer Regenerationsorte zu bilden, und die Liste erreichbarer Regenerationsorte in dem "ASON"-Netzwerk flutet; und die Wegberechnungsvorrichtung Folgendes umfasst:
ein erstes Erzeugungsmodul einer virtuellen Topologie (61), welches konfiguriert ist,
einen erreichbaren Ort in einer Liste erreichbarer Orte eines Quellorts zu einer virtuellen Topologie hinzuzufügen;
ein zweites Erzeugungsmodul einer virtuellen Topologie (62), welches konfiguriert ist, gemäß einer Liste erreichbarer Regenerationsorte des Quellorts und einer Liste erreichbarer Regenerationsorte eines anderen Orts, welche durch den Quellort empfangen wird, einen Ort zu bestimmen, welcher durch den Quellort in einem Fall erreicht werden kann, in welchem eine Regeneration verwendet wird, und den Ort zu der virtuellen Topologie hinzuzufügen, welcher durch den Quellort in dem Fall erreicht werden kann, in welchem eine Regeneration verwendet wird; und
ein Erzeugungsmodul eines tatsächlichen Topologiewegs (63), welches konfiguriert ist, gemäß der virtuellen Topologie und einer tatsächlichen Topologie des "ASON"-Netzwerks einen tatsächlichen Topologieweg von dem Quellort zu einem Zielort zu bestimmen.

9. Wegberechnungsvorrichtung nach Anspruch 8, wobei das erste Erzeugungsmodul einer virtuellen Topologie weiterhin eine erste Ortverbindungseinheit umfasst und die erste Ortverbindungseinheit den erreichbaren Ort in der Liste erreichbarer Orte des Quellorts mit dem Quellort verbindet.

10. Wegberechnungsvorrichtung nach Anspruch 9, wobei das zweite Erzeugungsmodul einer virtuellen Topologie weiterhin eine Ortbestimmungseinheit und eine zweite Ortverbindungseinheit umfasst, wobei
die Ortbestimmungseinheit gemäß der Liste erreichbarer Regenerationsorte des Quellorts einen existierenden Ort bestimmt, welcher eine ruhende Regenerationsfähigkeit aufweist und in der virtuellen Topologie ist;
der Quellort die Liste erreichbarer Regenerationsorte des anderen Orts empfängt und die zweite Ortverbindungseinheit den existierenden Ort, welcher eine ruhende Regenerationsfähigkeit aufweist, mit einem erreichbaren Regenerationsort verbindet, welcher in einer Liste erreichbarer Regenerationsorte des existierenden Orts ist;
die Ortbestimmungseinheit gemäß der Liste erreichbarer Regenerationsorte des Quellorts und der Liste erreichbarer Regenerationsorte des anderen Orts, welche durch den Quellort empfangen wird, einen Ort bestimmt, welcher keine ruhende Regenerationsfähigkeit aufweist und in dem "ASON"-Netzwerk ist; und
die zweite Ortverbindungseinheit den existierenden Ort, welcher eine ruhende Regenerationsfähigkeit aufweist, mit dem Ort verbindet, welcher keine ruhende Regenerationsfähigkeit aufweist und bei welchem eine Liste erreichbarer Regenerationsorte den existierenden Ort mit einer ruhenden Regenerationsfähigkeit umfasst.

11. Wegberechnungsvorrichtung nach Anspruch 10, wobei das Erzeugungsmodul eines tatsächlichen Topologiewegs weiterhin eine Wegberechnungseinheit und eine Wegauswahleinheit umfasst, wobei
die Wegberechnungseinheit in der virtuellen Topologie einen virtuellen Topologieweg mit den wenigsten Teilstrecken von dem Quellort zu dem Zielort berechnet; und
die Wegauswahleinheit den Ort, welcher eine ruhende Regenerationsfähigkeit aufweist, auf dem virtuellen Topologieweg als einen expliziten Ort verwendet und den tatsächlichen Topologieweg unter Bezugnahme auf die tatsächliche Topologie des "ASON"-Netzwerks bestimmt.

12. Wegberechnungsvorrichtung nach Anspruch 8, wobei jeder Ort in dem "ASON"-Netzwerk die Liste erreichbarer Regenerationsorte an alle Orte in dem "ASON"-Netzwerk durch Erweitern des "OSPF"-Protokolls separat flutet.

13. Wegberechnungsvorrichtung nach Anspruch 12, wobei jeder Ort in dem "ASON"-Netzwerk einen Ort als den erreichbaren Ort auswählt, durch welchen eine optische Störung eines Übertragungswegs eine optische Störungsanforderung in einem Fall erfüllt, in welchem keine Regeneration verwendet wird.

14. Wegberechnungsvorrichtung nach Anspruch 13, wobei die Liste erreichbarer Orte nur an dem Ort der Liste erreichbarer Orte gespeichert ist.

15. Wegberechnungsvorrichtung (80) für ein "ASON"-Netzwerk, wobei die Wegberechnungsvorrichtung einen Speicher (81), eine Netzwerkschnittstelle (82), einen Prozessor (83) und ein Bussystem (84) umfasst und der Speicher, die Netzwerkschnittstelle und der Prozessor separat mit dem Bussystem verbunden sind, wobei
ein erstes Programm in dem Speicher gespeichert ist und das erste Programm verwendet wird, um jedem Ort in dem "ASON"-Netzwerk zu ermöglichen, separat einen Ort zu berechnen, welcher in einem Fall erreicht werden kann, in welchem keine Regeneration verwendet wird, und den Ort als einen erreichbaren Ort zu verwenden, um eine Liste erreichbarer Orte zu bilden, und weiterhin einen Ort mit einer ruhenden Regenerationsfähigkeit aus einer jeweiligen Liste erreichbarer Orte als einen erreichbaren Regenerationsort auszuwählen, um eine Liste erreichbarer Regenerationsorte zu bilden;
die Netzwerkschnittstelle konfiguriert ist, die Liste erreichbarer Regenerationsorte in dem "ASON"-Netzwerk zu fluten;
ein zweites Programm in dem Speicher gespeichert ist und das zweite Programm verwendet wird, um einen erreichbaren Ort in einer Liste erreichbarer Orte eines Quellorts zu einer virtuellen Topologie hinzuzufügen, gemäß einer Liste erreichbarer Regenerationsorte des Quellorts und einer Liste erreichbarer Regenerationsorte eines anderen Orts, welcher durch den Quellort empfangen wird, einen Ort zu bestimmen, welcher durch den Quellort in einem Fall erreicht werden kann, in welchem eine Regeneration verwendet wird, den Ort zu der virtuellen Topologie hinzuzufügen, welcher durch den Quellort in dem Fall erreicht werden kann, in welchem eine Regeneration verwendet wird, und weiterhin gemäß der virtuellen Topologie und einer tatsächlichen Topologie des "ASON"-Netzwerks einen tatsächlichen Topologieweg von dem Quellort zu einem Zielort zu bestimmen; und
der Prozessor konfiguriert ist, das erste Programm und das zweite Programm auszuführen.

## Revendications

1. Procédé de calcul de chemin pour un réseau ASON, dans lequel chaque site dans le réseau ASON calcule séparément un site qui peut être atteint dans un cas où aucune régénération n'est utilisée et utilise le site comme un site accessible, pour former une liste de sites accessibles, sélectionne en outre un site ayant une capacité de régénération inactive à partir d'une liste de sites accessibles respectifs comme un site de régénération accessible, pour former une liste de sites de régénération accessibles, et propage la liste de sites de régénération accessibles dans le réseau ASON ; et le procédé comprend les étapes suivantes :
ajouter (S1) un site accessible dans une liste de sites accessibles d'un site source à une topologie virtuelle ;
déterminer (S2), selon une liste de sites de régénération accessibles du site source et une liste de sites de régénération accessibles d'un autre site qui est reçu par le site source, un site qui peut être atteint par le site source dans un cas où une régénération est utilisée, et ajouter, à la topologie virtuelle, le site qui peut être atteint par le site source dans le cas où une régénération est utilisée ; et
déterminer (S3), selon la topologie virtuelle et une topologie réelle du réseau ASON, un chemin de topologie réelle depuis le site source jusqu'à un site de destination.

2. Procédé selon la revendication 1, dans lequel l'étape consistant à ajouter un site accessible dans une liste de sites accessibles d'un site source à une topologie virtuelle comprend :
connecter le site accessible dans la liste de sites accessibles du site source et le site source.

3. Procédé selon la revendication 2, dans lequel les étapes consistant à déterminer, selon une liste de sites de régénération accessibles du site source et une liste de sites de régénération accessibles d'un autre site qui est reçu par le site source, un site qui peut être atteint par le site source dans un cas où une régénération est utilisée, et à ajouter, à la topologie virtuelle, le site qui peut être atteint par le site source dans le cas où une régénération est utilisée comprennent :
déterminer, selon la liste de sites de régénération accessibles du site source, un site existant qui a une capacité de régénération inactive et qui est dans la topologie virtuelle ;
recevoir, par le site source, la liste de sites de régénération accessibles de l'autre site, et connecter le site existant qui a une capacité de régénération inactive et un site de régénération accessible qui est dans une liste de sites de régénération accessibles du site existant ;
déterminer, selon la liste de sites de régénération accessibles du site source et la liste de sites de régénération accessibles de l'autre site qui est reçu par le site source, un site qui n'a aucune capacité de régénération inactive et qui est dans le réseau ASON ; et
connecter le site existant ayant une capacité de régénération inactive et le site qui n'a aucune capacité de régénération inactive et dont une liste de sites de régénération accessibles comporte le site existant ayant une capacité de régénération inactive.

4. Procédé selon la revendication 3, dans lequel l'étape consistant à déterminer, selon la topologie virtuelle et une topologie réelle du réseau ASON, un chemin de topologie réelle depuis le site source jusqu'à un site de destination comprend :
calculer, dans la topologie virtuelle, un chemin de topologie virtuelle de moindre bond depuis le site source jusqu'au site de destination ; et
utiliser le site, qui a une capacité de régénération inactive, sur le chemin de topologie virtuelle comme un site explicite et déterminer le chemin de topologie réelle en référence à la topologie réelle du réseau ASON.

5. Procédé selon la revendication 1, dans lequel chaque site dans le réseau ASON propage la liste de sites de régénération accessibles à tous les sites dans le réseau ASON séparément en étendant le protocole OSPF.

6. Procédé selon la revendication 5, dans lequel chaque site dans le réseau ASON sélectionne, comme le site accessible, un site par l'intermédiaire duquel un affaiblissement optique d'un chemin de transmission satisfait une exigence d'affaiblissement optique dans un cas où aucune régénération n'est utilisée.

7. Procédé selon la revendication 6, dans lequel la liste de sites accessibles est stockée uniquement dans le site de la liste de sites accessibles.

8. Appareil de calcul de chemin (60) pour un réseau ASON, dans lequel chaque site dans le réseau ASON calcule séparément un site qui peut être atteint dans un cas où aucune régénération n'est utilisée et utilise le site comme un site accessible, pour former une liste de sites accessibles, sélectionne en outre un site ayant une capacité de régénération inactive à partir d'une liste de sites accessibles respectifs comme un site de régénération accessible, pour former une liste de sites de régénération accessibles, et propage la liste de sites de régénération accessibles dans le réseau ASON ; et l'appareil de calcul de chemin comprend :
un premier module de génération de topologie virtuelle (61), configuré pour ajouter un site accessible dans une liste de sites accessibles d'un site source à une topologie virtuelle ;
un deuxième module de génération de topologie virtuelle (62), configuré pour déterminer, selon une liste de sites de régénération accessibles du site source et une liste de sites de régénération accessibles d'un autre site qui est reçu par le site source, un site qui peut être atteint par le site source dans un cas où une régénération est utilisée, et ajouter, à la topologie virtuelle, le site qui peut être atteint par le site source dans le cas où une régénération est utilisée ; et
un module de génération de chemin de topologie réelle (63), configuré pour déterminer, selon la topologie virtuelle et une topologie réelle du réseau ASON, un chemin de topologie réelle depuis le site source jusqu'à un site de destination.

9. Appareil de calcul de chemin selon la revendication 8, dans lequel le premier module de génération de topologie virtuelle comprend en outre une première unité de connexion de site, et la première unité de connexion de site connecte le site accessible dans la liste de sites accessibles du site source et le site source.

10. Appareil de calcul de chemin selon la revendication 9, dans lequel le deuxième module de génération de topologie virtuelle comprend en outre une unité de détermination de site et une deuxième unité de connexion de site,
l'unité de détermination de site déterminant, selon la liste de sites de régénération accessibles du site source, un site existant qui a une capacité de régénération inactive et qui est dans la topologie virtuelle ;
le site source recevant la liste de sites de régénération accessibles de l'autre site, et la deuxième unité de connexion de site connectant le site existant qui a une capacité de régénération inactive et un site de régénération accessible qui est dans une liste de sites de régénération accessibles du site existant ;
l'unité de détermination de site déterminant, selon la liste de sites de régénération accessibles du site source et la liste de sites de régénération accessibles de l'autre site qui est reçu par le site source, un site qui n'a aucune capacité de régénération inactive et qui est dans le réseau ASON ; et
la deuxième unité de connexion de site connectant le site existant ayant une capacité de régénération inactive et le site qui n'a aucune capacité de régénération inactive et dont une liste de sites de régénération accessibles comporte le site existant ayant une capacité de régénération inactive.

11. Appareil de calcul de chemin selon la revendication 10, dans lequel le module de génération de chemin de topologie réelle comprend en outre une unité de calcul de chemin et une unité de sélection de chemin,
l'unité de calcul de chemin calculant, dans la topologie virtuelle, un chemin de topologie virtuelle de moindre bond depuis le site source jusqu'au site de destination ; et
l'unité de sélection de chemin utilisant le site, qui a une capacité de régénération inactive, sur le chemin de topologie virtuelle comme un site explicite et déterminant le chemin de topologie réelle en référence à la topologie réelle du réseau ASON.

12. Appareil de calcul de chemin selon la revendication 8, dans lequel chaque site dans le réseau ASON propage la liste de sites de régénération accessibles à tous les sites dans le réseau ASON séparément en étendant le protocole OSPF.

13. Appareil de calcul de chemin selon la revendication 12, dans lequel chaque site dans le réseau ASON sélectionne, comme le site accessible, un site par l'intermédiaire duquel un affaiblissement optique d'un chemin de transmission satisfait une exigence d'affaiblissement optique dans un cas où aucune régénération n'est utilisée.

14. Appareil de calcul de chemin selon la revendication 13, dans lequel la liste de sites accessibles est stockée uniquement dans le site de la liste de sites accessibles.

15. Appareil de calcul de chemin (80) pour un réseau ASON, dans lequel l'appareil de calcul de chemin comprend une mémoire (81), une interface réseau (82), un processeur (83), et un système de bus (84), et la mémoire, l'interface réseau, et le processeur sont connectés séparément au système de bus, un premier programme étant stocké dans la mémoire, et le premier programme étant utilisé pour permettre à chaque site dans le réseau ASON de calculer séparément un site qui peut être atteint dans un cas où aucune régénération n'est utilisée et d'utiliser le site comme un site accessible, pour former une liste de sites accessibles, et de sélectionner en outre un site ayant une capacité de régénération inactive à partir d'une liste de sites accessibles respectifs comme un site de régénération accessible, pour former une liste de sites de régénération accessibles ;
l'interface réseau est configurée pour propager la liste de sites de régénération accessibles dans le réseau ASON ;
un deuxième programme est stocké dans la mémoire, et le deuxième programme est utilisé pour ajouter un site accessible dans une liste de sites accessibles d'un site source à une topologie virtuelle, déterminer, selon une liste de sites de régénération accessibles du site source et une liste de sites de régénération accessibles d'un autre site qui est reçu par le site source, un site qui peut être atteint par le site source dans un cas où une régénération est utilisée, ajouter, à la topologie virtuelle, le site qui peut être atteint par le site source dans le cas où une régénération est utilisée, et déterminer en outre, selon la topologie virtuelle et une topologie réelle du réseau ASON, un chemin de topologie réelle depuis le site source jusqu'à un site de destination ; et
le processeur est configuré pour exécuter le premier programme et le deuxième programme.
